(19) **Europäisches Patentamt European Patent Office Office européen des brevets**

(11) **EP 2 359 116 B1**

(12) **EUROPEAN PATENT SPECIFICATION**

(45) Date of publication and mention of the grant of the patent:
**27.02.2019 Bulletin 2019/09**

(51) Int Cl.:
**G01L 11/00** *(2006.01)* **G01L 21/12** *(2006.01)*

(21) Application number: **08878833.6**

(22) Date of filing: **19.12.2008**

(86) International application number:
**PCT/CA2008/002232**

(87) International publication number:
**WO 2010/069036 (24.06.2010 Gazette 2010/25)**

(54) **MICRO-THERMISTOR GAS PRESSURE SENSOR**

MIKROTHERMISTOR-GASDRUCKSENSOR

CAPTEUR DE PRESSION DE GAZ À MICRO-THERMISTANCE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**24.08.2011 Bulletin 2011/34**

(73) Proprietor: **Institut National d'Optique Sainte-Foy, Quebec G1P 4S4 (CA)**

(72) Inventors:
• **LE NOC, Loïc**
  **Québec**
  **QC G1R 1L6 (CA)**
• **TREMBLAY, Bruno**
  **St-Etienne de Lauzon**
  **Lévis, QC G6J 1C5 (CA)**
• **VIENS, Jean-François**
  **Québec**
  **QC G1H 1K7 (CA)**

(74) Representative: **Lavoix Bayerstrasse 83 80335 München (DE)**

(56) References cited:
**WO-A2-2007/089516    US-A- 5 539 674**
**US-A1- 2006 131 501    US-B1- 6 973 834**
**US-B1- 7 278 322    US-B2- 7 087 451**

**Description**

FIELD OF THE INVENTION

The present invention relates to a micro-thermistor gas pressure sensor.

BACKGROUND OF THE INVENTION

A conventional gas pressure sensor, such as a Pirani gauge, is calibrated against several known pressures to determine a relationship between ambient pressure and power dissipated by the sensor. On one hand, since a Pirani gauge may be designed to have a wide dynamic range and be relatively simple and inexpensive, there is a need to be able to use this type of pressure gauge as a substitute for much higher priced gauges such as capacitance manometers and ionization gauges. On a second hand, the growing markets of high-performance wafer-level micro-packaging require miniaturization of the gas pressure sensors and integration to standard CMOS processes and MEMS micro-devices such as bolometers, gyroscopes and accelerometers.
US 2007/0069133 A1 relates to a gas pressure sensor combining Pirani-like functionality and MEMS integration. Pressure sensors based on MEMS micro-sensor devices can achieve both low-cost and CMOS-compatible integration. However, existing MEMS micro-sensor devices may show inaccurate pressure readings when subjected to temperature fluctuations, especially at low pressures. US 2007/0069133 A1 exhibits such temperature sensitivity, because the electrical response of the sensor depends on the substrate and environment temperatures by virtue of the temperature dependency of the variable resistance. Furthermore, the method for pressure measurement relies on an absolute voltage reading instead of differential voltage readings, wherein absolute voltage reading may be subjected to inaccuracies if fabrication errors occur from one sensor to the other.
Gas pressure micro-sensors showing relative immunity to temperature fluctuations have been developed. US 6,945,119 B2 and US 7,331,237 B2 relate to temperature-compensated micro-sensors integrated in a CMOS circuit. Temperature fluctuation compensation is achieved using a combination of temperature-sensitive and temperature-insensitive elements coupled to a bridge readout circuit. However, temperature compensation of these gas pressure sensors is achieved at the cost of structural complexity of the device and readout circuit, which impede integration of such sensors into MEMS micro-devices. Furthermore, the method for pressure measurement relies on an absolute voltage reading instead of differential voltage readings which lead to inaccuracies if fabrication errors occur from one gauge to the other.
US 2006/0131501 A1 discloses an electronic device such as an infrared sensor, of which the sensing element is encapsulated within a reduced pressure atmosphere and which can further reduce the pressure, if necessary, by measuring the pressure of the atmosphere within its cavity, and also relates to a method for fabricating such an electronic device.
WO 2007/089516 A2 discloses a method and an apparatus for achieving temperature compensation of a heat-loss vacuum gauge over its pressure range. A voltage is measured across a sensor leg, a sensor leg and a temperature compensating leg connected together in series, or a sensor leg and a fixed resistive leg coupled together in series. A voltage is also measured across a subleg of the temperature compensating leg. The temperature compensating leg may include a temperature sensitive subleg and a temperature stable subleg connected together in series. The sublegs may include one or more temperature sensitive and/or temperature stable elements. The measured voltages are combined to produce temperature independent pressure indications over a pressure range. Three-dimensional curve-fitting or similar techniques may be used to combine the measured voltages.
It is the object of the present invention to provide an apparatus and method allowing 1) miniaturization of the wide-dynamic-range pressure sensors to address the high-performance micro-packaging markets and 2) integration to standard CMOS processes and MEMS micro-devices such as bolometers, gyroscopes and accelerometers, and 3) relative immunity of the pressure sensors to temperature fluctuations and fabrication errors by the use of differential voltage readings.

SUMMARY OF THE INVENTION

The invention presents an apparatus and method for precisely measuring gas pressure in atmospheric environments as small as 1 picoliter. The micro-thermistor gas pressure sensor and method of operation described herein provides gas pressure measurements over a large dynamic range and with good immunity to temperature fluctuations. The micro-thermistor gas pressure sensor is compatible with standard CMOS fabrication processes and readout circuits.
The gas pressure sensing element of the present invention includes a suspended platform micro-thermistor device, which is a suspended electrical transducer that changes electrical resistance with a change of temperature. The gas pressure sensor assembly comprises the suspended platform micro-thermistor device and a readout electrical circuit driving the micro-thermistor device. When the micro-thermistor is electrically excited and heated, its temperature at equilibrium is a function of applied electrical power and of thermal transfer to the environment. The gas is part of this environment and the heat transferred from the micro-thermistor device to the environment is a function of the gas pressure. The principle of gas pressure measurement consists in heating the micro-thermistor device with a binary-wave electrical excitation, measuring its thermal conduction to the environment, and determining the gas pressure from the measured thermal conduction. Specifically, the method consists in measuring the ohmic responsivity of the suspended platform micro-thermistor with a binary-wave electrical excitation. The ohmic responsivity is a direct measurement of the thermal conductivity of the suspended platform micro-thermistor sensor device, the latter being related to gas pressure.

Thus, in accordance with an aspect of the invention, there is provided a gas pressure sensor assembly according to claim 1.

In accordance with another aspect of the invention, there is provided a method for gas pressure measurement according to claim 8.

These and other features and advantages of the invention will be apparent to those skilled in the art from the following detailed description of preferred embodiments, taken together with the accompanying drawings.

BRIEF DESCRIPTION OF THE DRAWINGS

FIG 1. is a schematic representation of the micro-thermistor gas pressure sensing element and its surroundings, including the heat budget of the system.

FIG. 2. is a chart showing ohmic responsivity $\Omega$ as function of air pressure p, for a 70x70 $\mu m^2$ micro-thermistor gas pressure sensor.

FIG. 3. shows an exemplary embodiment of the gas pressure sensor assembly.

FIG. 4. shows another exemplary embodiment of the gas pressure sensor assembly.

FIG. 5. shows a graph of the effect of temperature fluctuations of ($T_b$,$T_s$,$T_{env}$) on the micro-thermistor gas pressure sensor and deviations from an ideal 5-parameter calibration equation determined by MonteCarlo simulation. The plot shows the statistical error ($1\sigma$) on pressure measurement under a temperature fluctuation of 1K ($1\sigma$) for $T_b$ and 10K ($1\sigma$) for ($T_s$,$T_{env}$), for a 70x70 $um^2$ micro-thermistor gas pressure sensor.

DETAILED DESCRIPTION OF THE INVENTION

This invention presents an apparatus and method for measuring gas pressure in atmospheric environments as small as 1 picoliter, with pressure measurements performed over a large dynamic range and with good immunity to temperature fluctuations. The apparatus and method of the present invention are compatible with digital and analog readout circuits and CMOS fabrication processes.

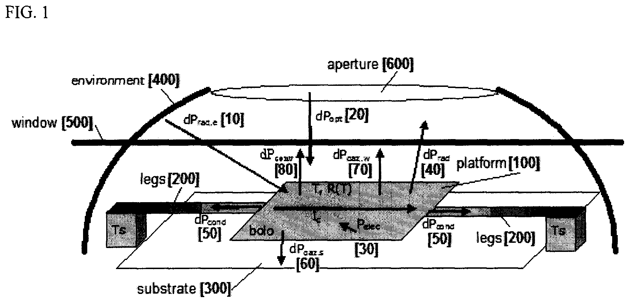

Figure 1 is a schematic representation of the apparatus. The gas pressure sensing element consists of a micro-thermistor device comprising a suspended platform [100] and suspending legs [200] connecting the suspended platform to a substrate [300]. The micro-thermistor suspended platform [100] may have a width between 0.1 $\mu m$ and 250$\mu m$, a length between 0.1$\mu m$ and 250$\mu m$, and a thickness between 0.1$\mu m$ and 5$\mu m$. The suspending legs [200] must provide enough mechanical rigidity for suspending the micro-thermistor platform [100] at least 0.1$\mu m$ above the substrate [300] and must provide a path for electrical connection from the suspended platform [100] to the substrate [300]. Standard CMOS fabrication processes can be used to fabricate the suspended platform micro-thermistor device on the substrate. The suspending legs [200] may be made of silicon nitride or silicon dioxide materials or any other materials procuring mechanical rigidity, coated with a metallic layer to procure electrical conductivity, and have a length between 1$\mu m$ and 1000$\mu m$. The suspending legs [200] usually have smaller widths than the suspended platform [100] in order to procure thermal isolation between the suspended platform and the substrate [300]. The substrate [300] may consist of a silicon wafer or a CMOS electrical readout circuit or any CMOS integrated device. The substrate is partly or fully enclosed within a gas pressure environment [400] which may include a window [500] (e.g. infrared window or diaphragm or mask) for shielding the suspended platform [100] from excess infrared radiation coming from the environment [400], and may include an optical aperture [600] for providing the suspended platform [100] infrared radiation from a scene. The environment [400] must be large enough to entirely encapsulate the micro-thermistor suspended platform [100] and suspending legs [200]. Since the micro-thermistor suspended platform [100] and suspending legs [200] have micrometer-scale dimensions, the environment [400] encompassing the micro-thermistor device may have a volume as small as 1

picoliter ($10^{-15}$ m$^3$). The environment [400] is filled with a gas that exerts pressure equally everywhere in the environment, including the top and bottom surfaces of the suspended platform [100]. The gas may be composed of air, oxygen, nitrogen, noble gas or any other gases including a mixture of several different gases.

The temperature of the micro-thermistor suspended platform [100] is a function of applied heating power and thermal transfers to the substrate and to the environment. Figure 1 shows the total heat budget of the system defined as the thermal transfers between the suspended platform [100] of the micro-thermistor and the substrate [300] and environment [400]. Specifically, the micro-thermistor suspended platform [100] receives heat from a plurality of sources:

- $P_{rad,e}$, by absorbing infrared radiation emitted by the environment [10].
- $P_{opt}$, by absorbing infrared radiation coming from the scene through the window [20]
- $P_{elec}$, by Joule heating when an electrical current is applied from the legs through the micro-thermistor suspended platform [30].

And the micro-thermistor suspended platform [100] dissipates heat to a plurality of thermal conduction paths:

- $P_{rad}$, by thermal radiation [40]
- $P_{cond}$, by thermal conduction to the substrate through the legs [50]
- $P_{gaz,s}$, by thermal conduction to the substrate through the gas [60]
- $P_{gaz,w}$, by thermal conduction to the window through the gas [70]
- $P_{conv}$, by thermal convection to the window through the gas [80]

The dynamic analysis of the system is based on the use of heat transfer equation for the suspended platform [100] of the micro-thermistor. Taking into consideration the thermodynamic interactions between the micro-thermistor and its surroundings, it is well known in the art of thermal conduction that the following heat equation can be derived:

$$C \frac{d(\Delta T)}{dt} + G(\Delta T) = P$$

Where C is the thermal capacity of the suspended platform [100] of the micro-thermistor (in units of J/K), G its thermal conduction (in units of W/K) related to all the thermal dissipation mechanisms of the system [40] [50] [60] [70] [80], $\Delta T$ the incremental temperature change of the suspended platform [100] of the micro-thermistor with respect to the substrate [300] ($\Delta T = T_b - T_s$) (in units of K) and P is the power [10] incident [20] on the micro-thermistor or applied [30] to the micro-thermistor expressed in Watts. The main component of the power P, the applied electrical excitation $P_{elec}$ [30], is related to the electrical resistance of the suspended platform [100] of the micro-thermistor $R_b$, the electrical potential $V_b$ across the legs [200] of the micro-thermistor, and the electrical current $i_b$ passing through the suspended platform [100] of the micro-thermistor.

The micro-thermistor suspended platform [100] may comprise a combination of silicon dioxide and silicon nitride thin films for procuring mechanical rigidity to the platform; a metallic thin film for procuring electrical conductivity to the platform; and a thermally sensitive thin film material for procuring change of electrical properties with a change of temperature of the platform. The thermally sensitive thin film material may consist of vanadium oxide, titanium oxide or amorphous silicon.

Vanadium oxide (such as $VO_x$ with $1<x<3$) has received most attention as a micro-thermistor thermally sensitive thin film material because of the large temperature coefficient of resistance (TCR) of about 2% per Kelvin near 20°C. The properties of vanadium oxide films are dependent of the microstructure and crystallinity. These can be controlled by the experimental process parameters, such as the molecular precursors, heat treatments and controlled atmosphere. Other thermally sensitive thin film materials can be used for the micro-thermistor suspended platform [100] in order to procure change of electrical properties of the micro-thermistor with a change of temperature of the platform, ideally with a temperature coefficient of resistance (TCR) of at least 0.5% per Kelvin. The thermally sensitive thin film material is not limited to a specific material composition; it may consist of vanadium oxide, titanium oxide, amorphous silicon or any material or alloy with a temperature coefficient of resistance (TCR) of at least 0.5% per Kelvin.

The coefficient of thermal conduction G between the suspended platform [100] of the micro-thermistor and its surroundings [300] [400] can be described by the contribution of all the thermal dissipation mechanisms of the system [40] [50] [60] [70] [80]:

$$G = G_{leg} + G_{rad} + G_{gas} + G_{conv}$$

where $G_{leg}$ is the coefficient of thermal conduction between the micro-thermistor suspended platform [100] and the substrate [300] through the micro-thermistor legs which determines the heat dissipation through the legs [50];

$G_{rad}$ is the coefficient of thermal conduction between the micro-thermistor suspended platform [100] and the environment [400] by emitted infrared radiation which determines the heat dissipation through radiation [40];

$G_{gas}$ is the coefficient of thermal conduction between the micro-thermistor suspended platform [100] and its surroundings through the gas, which comprises heat dissipation to the substrate [300] through the gas [60] and heat dissipation to the environment [400] through the gas [70]; and $G_{conv}$ is the coefficient of thermal conduction between the micro-thermistor suspended platform [100] and its surroundings by gas convection [80].

LEG CONDUCTION:

The coefficient of thermal conduction $G_{leg}$ between the micro-thermistor suspended platform [100] and the substrate [300] through the legs [200] depends on the leg length, leg cross-section and leg material. In practice, the coefficient of thermal conduction $G_{leg}$ is not always known precisely and may depend on temperature, and the gas pressure measurement method herein described in this invention cancels the need for precise knowledge of this term of the equation. Typically, the coefficient of thermal conduction to the substrate through the legs is $10^{-6}$ W/K or less.

RADIATION:

The coefficient of thermal conduction Grad by emitted infrared radiation from the micro-thermistor suspended platform [100] and its surroundings [300] [400] depends on the surface area of the suspended platform [100] and on its spectral emissivity which could be a blackbody or non-blackbody function of temperature. For an ideal blackbody material, this coefficient of thermal conduction can be approximated as the sum of radiated power from the micro-thermistor bottom surface facing the substrate [300] and from the micro-thermistor top surface facing the environment [400]:

$$G_{rad} = \sigma\varepsilon\beta A\,(T_b^4 - T_s^4)/(T_b - T_s)\ +\ \sigma\varepsilon\beta A\,(T_b^4 - T_{env}^4)/(T_b - T_s)\ \simeq\ 4\sigma\varepsilon\beta A\,(T_s^3 + T_{env}^3)$$

where $\sigma$ is the Stefan-Boltzmann constant, $\varepsilon$ is the effective emissivity of the micro-thermistor suspended platform [100], A is its surface area, $\beta$ is a form factor that includes thermal dissipation through other parts of the micro-thermistor structure, $T_b$ is the micro-thermistor temperature, $T_s$ is the substrate temperature and $T_{env}$ is an effective environment temperature related to the hemispheric distribution of all thermal components of the environment seen by the micro-thermistor platform [100]. The right-hand side of the equation assumes that the temperature difference between the micro-thermistor and the substrate is small with respect to the absolute temperature of the micro-thermistor ($|T_b - T_s| \ll T_b$) which is valid to 1% error when the micro-thermistor is heated only by a few degrees Kelvin. In practice, the spectral emissivity $\varepsilon\square$ of the platform and the temperatures ($T_b$, $T_s$, $T_{env}$) are not always known precisely, and consequently the coefficient of thermal conduction Grad is not always known precisely. The gas pressure measurement method herein described in this invention cancels the need for precise knowledge of these terms of the equation.

GAS CONDUCTION:

The coefficient of thermal conduction Ggas between the micro-thermistor suspended platform [100] and its surroundings through the gas, which comprises heat dissipation to the substrate [300] through the gas [60] and heat dissipation to the environment [400] through the gas [70], can be obtained by the kinetic theory of gases for the heat conduction in a gas between two parallel plates;

$$G_{gas} = \frac{\beta \cdot A}{\frac{d_s}{\lambda_{gas_s}} + \frac{1}{\gamma_{gas} \cdot p}} + \frac{k \cdot \beta \cdot A}{\frac{d_e}{\lambda_{gas_e}} + \frac{1}{\gamma_{gas} \cdot p}}$$

Where p is the gas pressure, $d_s$ the distance between the micro-thermistor suspended platform [100] and the substrate [300], $d_e$ the distance between the micro-thermistor suspended platform [100] and the window [500], A is the surface area of the micro-thermistor suspended platform [100], $\beta$ is a form factor that includes thermal dissipation through other parts of the micro-thermistor structure, and k = ($T_b - T_{env}$)/($T_b - T_s$). In the absence of window [500], $d_e$ can be defined as an effective distance between the micro-thermistor suspended platform [100] and the environment [400]. $\lambda_{gas}$ is the

thermal conductivity of the gas in the high-pressure regime and $\gamma_{gas}$ is the thermal conductivity per unit pressure and length in the low-pressure regime. The gas conductivity $\lambda_{gas}$ depends on the gas temperature:

$$\lambda_{gas} = \lambda_o + (d\lambda/dT_s).(T_g - T_o)$$

Where $T_g$ is an effective gas temperature given by $T_g = (1-\eta)T_x + \eta T_b$, where $T_x = T_s$ (substrate side) or $T_x = T_{env}$ (environment side) and $\eta$ is a thermal distribution factor; typically $\eta \sim 0.5$. For air: $d\lambda/dT = 7.2167e\text{-}005$ W/mK$^2$ and $\lambda_o = 0.0243$ W/mK at $T_o = 273$K. Other gases may show different coefficients. In practice, the gas conductivities ($\lambda_{gas}$, $\lambda_{gas}$, $\eta$), the temperatures ($T_b$, $T_s$, $T_{env}$), and the dimensional terms ($d_s$, $d_e$, $\beta$ are not always known precisely, and the gas pressure measurement method herein described in this invention cancels the need for precise knowledge of these terms of the equation.

CONVECTION:

The heat transferred by free convection [80] from the micro-thermistor suspended platform [100] into the gas to the environment [400] at the temperature $T_{env}$ is given by

$$P_{conv} = G_{conv} \cdot \Delta T = A\,h\,(T_b - T_{env})$$

Where h is the convection coefficient of the gas [in air h = 5 W/m$^2$K]. In practice, the convection coefficient h is not always known precisely, and the gas pressure measurement method herein described in this invention cancels the need for precise knowledge of this term of the equation. For most cases encompassed within this invention, the thermal conduction $G_{conv}$ by free air convection through gas movement is negligible compared to the thermal conduction $G_{gas}$ through the gas.

The thermal conduction G between the suspended platform [100] of the micro-thermistor and its surroundings [300] [400] can also be described by the contribution from additional factors herein not mentioned, dependent on the micro-thermistor three-dimensional design and fabrication. In practice, these additional factors are not always known precisely, and the gas pressure measurement method herein described in this invention cancels the need for precise knowledge of these terms of the equation.

This invention thus relates to a microscopic thermistor apparatus for measuring gas pressure in atmospheric environments with volumes as small as 1 picoliter. The gas pressure sensing element consists of a suspended platform micro-thermistor device which is a transducer that changes electrical resistance with a change of temperature. The gas pressure sensor assembly comprises the suspended platform micro-thermistor device [100] and a readout circuit connected to the suspended platform for driving the micro-thermistor device electrically. When the micro-thermistor is electrically excited and heated, its temperature at equilibrium is a function of incident radiative power [10] [20] and applied electrical power [30], and of thermal transfer to the environment including all the heat dissipation mechanisms described above [40] [50] [60] [70] and [80]. Since the gas is part of this environment, and since the heat transferred from the micro-thermistor suspended platform [100] to the environment [400] and substrate [300] depends on gas pressure [60] [70], the micro-thermistor apparatus can be used as a microscopic gas pressure sensing device.

Gas pressure measurement method:

The suspended platform of the micro-thermistor [100] is electrically excited by voltage source connected to it. Since the micro-thermistor device is electrically resistive, it is well known in the art that this electrical excitation procures heating to the micro-thermistor by virtue of the Joule effect. The temperature of the micro-thermistor at equilibrium is a function of applied electrical power [30] and of thermal transfer to the substrate [300] and to the environment [400] via the plurality of thermal dissipation mechanisms previously described [10] [20] [40] [50] [60] [70] and [80]. The gas is part of the environment [400] and the heat transferred from the micro-thermistor device to the environment [60] [70] is a function of the gas pressure exerted within the environment. The principle of gas pressure measurement thus consists of heating the suspended platform micro-thermistor device [100] by Joule heating [30] and of measuring the thermal conductivity of the micro-thermistor device to its surroundings, and determining the gas pressure from the measured thermal conduction.

The micro-thermistor gas sensor of the present invention is highly sensitive to the radiative thermal conduction $G_{rad}$ and to the leg thermal conduction $G_{leg}$. The influence of radiation conduction and leg conduction on the micro-thermistor suspended platform [100] must be considered in the proposed method of gas pressure measurement in order to prevent large errors of measurements to occur, since the power absorbed [10] [20] and dissipated [40] [50] by radiation and by leg conduction is of the same order of magnitude as the power dissipated through the gas [60] [70] [80]. To improve sensor tolerance against radiation conduction and leg conduction it is proposed to perform a double measurement at two fixed micro-thermistor temperatures. This double-measurement method herein described in this invention cancels the need for precise knowledge of the radiation term $G_{rad}$, of the conduction through the legs $G_{leg}$, of convection through the gas $G_{conv}$ and of any additional thermal conduction factors herein not mentioned, since these factors are not always known precisely in practice.

Specifically, the method of measuring gas pressure with the suspended platform micro-thermistor assembly of the present invention is based on probing the thermal response of the micro-thermistor device with a binary-wave electrical excitation [30]. The binary-wave electrical excitation may consist of a step-function voltage signal with a minimum voltage ($V_1$) followed by a maximum voltage ($V_2$), the difference between the minimum and maximum voltages corresponds to the amplitude of the binary-wave signal, $\Delta V = V_2 - V_1$. The voltage $V_b$ applied to the micro-thermistor depends on the electrical excitation V and on the transfer function f of the readout circuit, $V_b = f\,V$. The binary-wave signal generates an incremental amount of electrical heating power [30] applied to the micro-thermistor suspended platform [100], $dP_b = V_{b2}^2/R_{b2} - V_{b1}^2/R_{b1}$, leading to an incremental change of micro-thermistor electrical resistance, $dR_b = R_{b2} - R_{b1}$, where $R_{b1}$ and $R_{b2}$ are the electrical resistances of the micro-thermistor suspended platform at temperatures $T_{b1}$ and $T_{b2}$ respectively. Experimentally, the resistance of the micro-thermistor $R_b$ is used instead of the temperature $T_b$; the temperature cannot be measured experimentally but the temperature is completely determined by the electrical resistance of the micro-thermistor by virtue of its temperature coefficient of resistance (TCR). Generally, both $T_{b1}$ and $T_{b2}$ are a few degrees above substrate/environment temperatures $T_s$ and $T_{env}$, and the difference between $T_{b1}$ and $T_{b2}$ is a few degrees Kelvin.

Alternatively, the binary-wave electrical excitation may consist of a periodic square-wave voltage signal with minimum voltages ($V_1$) followed periodically by maximum voltages ($V_2$) with a frequency $\omega$, the difference between the minimum and maximum voltages corresponds to the amplitude of the periodic binary-wave signal, $\Delta V = V_2 - V_1$, and to an incremental amount of electrical heating power per period of the binary-wave, $dP_b = V_{b2}^2/R_{b2} - V_{b1}^2/R_{b1}$, and to an incremental change of micro-thermistor electrical resistance, $dR_b = R_{b2} - R_{b1}$. The gas pressure measurement method consists of measuring the ohmic responsivity $dR_b/dP_b$ of the micro-thermistor device in response to the binary-wave electrical excitation; the ohmic responsivity is a direct measurement of the thermal conductivity of the suspended platform micro-thermistor device, the later being related to gas pressure as described previously.

Taking into account the thermodynamic interactions between the micro-thermistor and its surroundings, comprising all the thermal dissipation mechanisms [40] [50] [60] [70] [80] previously described, the following heat equation can be derived:

$$C\frac{d(\Delta T)}{dt} + G(\Delta T) = P$$

Where C is the thermal capacity of the micro-thermistor platform [100], G its coefficient of thermal conduction comprising every heat dissipation mechanisms previously defined, and $\Delta T$ the temperature change of the micro-thermistor suspended platform [100] with respect to the substrate [300]: $\Delta T = T_b - T_s$. The right hand side of the equation represents the power applied to the micro-thermistor suspended platform which may consist principally of the binary-wave electrical excitation supplying an incremental amount of electrical heating power to the micro-thermistor [30], $P = P_b$. As seen previously, the coefficient of thermal conduction G depends on several factors, including the micro-thermistor temperature $T_b$, and may take the form $G = G(T_b)$. Steady-state is achieved after a time period of $t > C/G$, typically 100 msec or more, from which d/dt tends to zero. At steady-state, and to first order, the solution for the thermal conductivity takes the form,

$$G + \frac{dG}{dT_b}(T_b - T_s) = \frac{P_b}{(T_b - T_s)}$$

Where $P_b$ is defined as the electrical heating power needed to bring the micro-thermistor platform from the temperature $T_s$ to the temperature $T_b$. The same relation applies to the difference of electrical heating power between two measurements made at temperatures $T_{b1}$ and $T_{b2}$,

$$G + \frac{dG}{dT_b}(T_b - T_s) = \frac{(P_{b2} - P_{b1})}{(T_{b2} - T_{b1})} = \frac{dP_b}{dT_b}$$

Since the micro-thermistor electrical resistance is function of temperature, by virtue of its non-zero Temperature

Coefficient of Resistance, $\sigma = (dR_b/dT_b)/R_b$, the solution on thermal conductivity can be expressed by:

$$G_{leg} + G_{radiation} + G_{gas} + G_{conv} + \frac{dG}{dT_b}(T_b - T_s) = \alpha R_b \frac{dP_b}{dR_b} = \frac{\alpha R_b}{\Omega}$$

Where $\sigma$ is the temperature coefficient of resistance (TCR) of the micro-thermistor and $R_b$ its electrical resistance at the reference temperature $T_s$. The term $\Omega = dR_b/dP_b$ is the ohmic responsivity of the micro-thermistor suspended platform. The ohmic responsivity $\Omega$ □of the micro-thermistor suspended platform can be measured since it is related to the experimentally measurable parameters of the micro-thermistor $P_{b1}$, $P_{b2}$, $R_{b1}$, $R_{b2}$, $V_{b1}$, and $V_{b2}$:

$$\frac{\alpha R_b}{\Omega} = \frac{(P_{b2} - P_{b1})}{(T_{b2} - T_{b1})} = \alpha R_b \frac{(P_{b2} - P_{b1})}{(R_{b2} - R_{b1})} = \alpha R_b \frac{\left(\frac{V_{b2}^2}{R_{b2}} - \frac{V_{b1}^2}{R_{b1}}\right)}{(R_{b2} - R_{b1})}$$

Since the micro-thermistor acts as a variable electrical resistance in the electrical circuit due to its non-zero temperature coefficient of resistance, the ohmic responsivity $\Omega$ □represents the differential relation of the change of electrical resistance $dR_b = R_{b2} - R_{b1}$ of the micro-thermistor platform in response to an incremental change of heating power $dP_b = P_{b2} - P_{b1}$. In the present invention, it is desirable to have as large a temperature coefficient of resistance as possible for the micro-thermistor thermally sensitive thin film material in order to magnify the change of micro-thermistor electrical resistance in response to a change of heating power, and therefore improve device sensitivity. Ideally, the temperature coefficient of resistance should be larger than 0.5% per Kelvin ($\alpha > 0.005$).

As set forth in the above equation, the ohmic responsivity $\Omega$ of the micro-thermistor can be determined by a measurement of the incremental change of heating power ($dP_b = P_{b2} - P_{b1}$), and/or a measurement of the incremental change of temperature ($dT_b = T_{b2} - T_{b1}$), and/or a measurement of the incremental change of electrical resistance ($dR_b = R_{b2} - R_{b1}$), and/or a measurement of the incremental change of applied voltage ($dV_b = V_{b2} - V_{b1}$). Full temperature compensation for the gas pressure measurement method herein described can be obtained by keeping the incremental change of temperature ($dT_b = T_{b2} - T_{b1}$) constant during the measurements.

To cancel the temperature-dependency of the unknown power absorbed [10] [20] and dissipated [40] [50] [80] by the micro-thermistor platform [100], which depends mostly on the micro-thermistor temperature $T_b$, and to cancel the need for precise knowledge of the parameters ($\lambda_{gas}$, $\lambda_{gas}$, $\eta$, $T_s$, $T_{env}$, $\varepsilon$, $d_s$, $d_e$, $\beta$, h□) □of the system, it is sufficient to realize two measurements always at the same micro-thermistor temperatures ($T_{b1}$, $T_{b2}$) and to consider the difference of applied power $dP_b$ [30] at those same two micro-thermistor temperatures. Assuming that the temperatures ($T_{b1}$, $T_{b2}$, $T_s$, $T_{env}$) and gas composition are kept constant during the two measurements, the conductivity terms $G_{leg}$, $G_{rad}$, and $G_{conv}$ will be kept constant. The ohmic responsivity $\Omega$ □will then be a function of pressure p only by virtue of the gas conductivity term $G_{gas} = G_{gas}(p)$:

$$\frac{\alpha R_b}{\Omega} = G_{leg} + G_{radiation} + G_{gas} + G_{conv} + \frac{dG}{dT_b}(T_b - T_s) = G_{gas} + constant$$

In this invention the heating method consists of heating the micro-thermistor device with a binary-wave electrical excitation supplying an incremental amount of electrical heating power $dP_b$ [30] to the micro-thermistor [100]. The binary-wave electrical excitation consists of a step-function voltage signal with a minimum voltage ($V_1$) followed by a maximum voltage ($V_2$), the difference between the minimum and maximum voltages corresponds to the amplitude of the binary-wave signal, $\Delta V = V_2 - V_1$. The voltage $V_b$ applied to the micro-thermistor depends on the electrical excitation V and on the transfer function f of the readout circuit, $V_b = f V$. The binary-wave signal generates an incremental amount of electrical heating power [30] applied to the micro-thermistor suspended platform [100], $dP_b = V_{b2}^2/R_{b2} - V_{b1}^2/R_{b1}$, leading to an incremental change of micro-thermistor electrical resistance, $dR_b = R_{b2} - R_{b1}$, where $R_{b1}$ and $R_{b2}$ are the electrical resistances of the micro-thermistor suspended platform at temperatures $T_{b1}$ and $T_{b2}$ respectively, and $V_{b1}$ and $V_{b2}$ are the voltages at the micro-thermistor when the voltage source [120] is at $V_1$ and $V_2$, respectively. By virtue of the relation between electrical resistance and temperature of the micro-thermistor, given by the temperature coefficient of resistance (TCR), the minimum voltage ($V_1$) of the binary-wave electrical excitation is adjusted so that the micro-thermistor resistance is at a predetermined value $R_{b1}$ and the maximum voltage ($V_2$) of the binary-wave electrical excitation is adjusted so that the micro-thermistor resistance is at a predetermined value $R_{b2}$. The values of ($R_{b1}$, $R_{b2}$, $dR_b$, $T_{b1}$, $T_{b2}$) are thus constant and the measurements of ($P_{b1}$, $P_{b2}$, $V_{b1}$, $V_{b2}$) are done always at the same micro-thermistor temperatures $T_b$. The ohmic responsivity $\Omega$ □of the suspended platform micro-thermistor can therefore be determined from $\Omega = dR_b/dP_b$

with minimization of the temperature dependencies of [10], [20], [40] [50] and [80].

Since the ohmic responsivity $\Omega\,\square$ of the suspended platform micro-thermistor is related to the thermal conductivity G of the micro-thermistor, and therefore to gas pressure p within the environment as mentioned previously, a measurement of ohmic responsivity will provide a measurement of gas pressure. The measurements must be made at thermal steady-state; since thermal steady-state is achieved typically after 10 msec or more the frequency $\omega$ of the binary-wave voltage source [120] must be below 100 Hertz for thermal steady-state to occur during the measurements.

The method for gas pressure measurement of the present invention thus consists in electrically exciting a suspended platform micro-thermistor sensor device with a binary-wave voltage source signal; and measuring the ohmic responsivity of the said suspended platform micro-thermistor sensor device; and determining gas pressure from said ohmic responsivity.

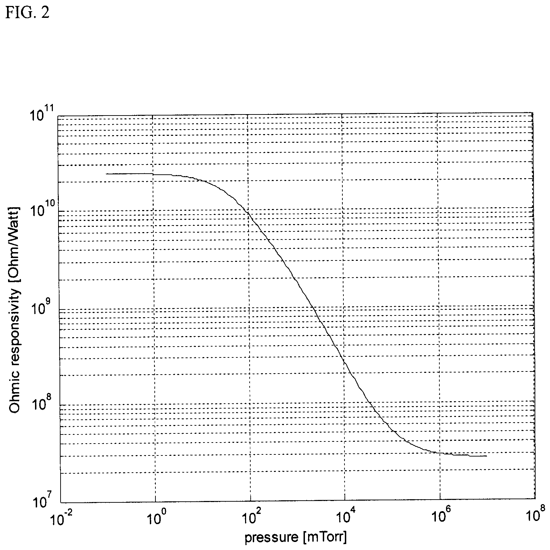

Figure 2 plots the relation between ohmic responsivity $\Omega\,\square$ and air pressure p for an exemplary micro-thermistor device. It can be seen that the ohmic responsivity varies as function of pressure in the range of air pressures between $10^{-4}$ Torr to $10^4$ Torr, thus providing gas pressure sensing capability over a wide dynamic range. Since the gas pressure sensing capability of the micro-thermistor gas pressure sensor extends from $10^{-4}$ Torr to $10^4$ Torr, the micro-thermistor gas pressure sensor can be used to monitor the pressure of a gas below and above atmospheric pressure. The sensor is not constrained to sensing gas pressure inside vacuum environments or packages. By a proper design of the distance $d_s$ between the micro-thermistor platform [100] and the substrate [300], of the distance $d_e$ between the micro-thermistor platform [100] and the window [500], of the surface area A and emissivity $\varepsilon$ of the micro-thermistor platform [100], of the length of the suspending legs [200] and of the micro-thermistor temperature $T_b$, etc., the gas pressure sensing capability of the micro-thermistor gas sensor can be tuned below $10^{-4}$ Torr or above $10^4$ Torr. Low pressure sensing capability can be achieved, for example, by increasing the surface area A and decreasing the emissivity $\varepsilon$ of the platform [100] and by increasing the length of the suspending legs [200]. High pressure sensing capability can be achieved, for example, by decreasing the distances $d_s$ and $d_e$ between the micro-thermistor platform [100] and the substrate [300] and window [500]. Gas pressure sensing tuning capabilities of the micro-thermistor gas sensor are not limited to these specific parameter changes.

Several micro-thermistor suspended platforms, with different physical characteristics such as the ones just mentioned, may be combined within a single readout circuit to provide sensing capability over a wider dynamic range than a single micro-thermistor suspended platform. For example, several micro-thermistor suspended platforms may be combined and tuned for measuring gas pressure at low pressure regimes, while several other micro-thermistor suspended platforms may be combined in the same readout circuit and tuned for measuring gas pressure at high pressure regimes; the plurality of micro-thermistor suspended platforms thus combined to provide sensing capability over an overall wider dynamic range. The plurality of micro-thermistor suspended platforms may be combined in series or in parallel with respect to the voltage source [120] along with load resistances, or load inductances, or load capacitances, or a combination thereof comprised in the same readout circuit [101].

Exemplary embodiments of the sensor apparatus:

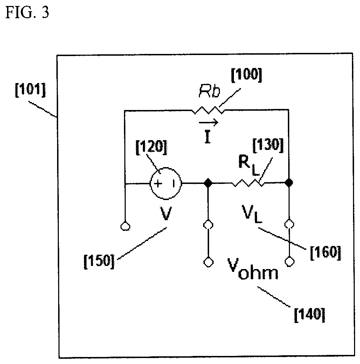

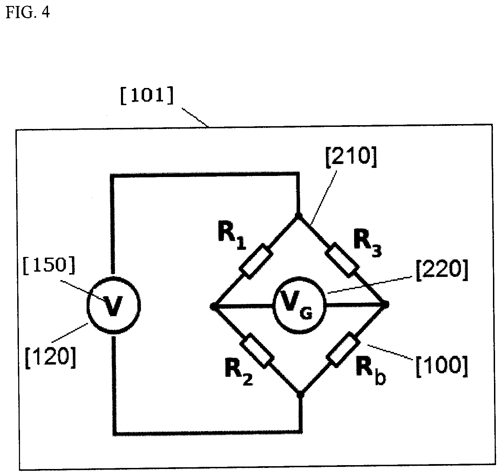

Figure 3 and 4 show the schematics for exemplary embodiments of the micro-thermistor gas pressure sensor assembly of the present invention. The micro-thermistor gas pressure sensor assembly comprises 1) at least one suspended platform micro-thermistor sensor device [100] fabricated on a substrate [300] and exposed to the gas pressure of a given atmospheric environment [400], and 2) a readout electrical circuit [101] connected to the said suspended platform micro-thermistor sensor device [100], wherein said suspended platform micro-thermistor sensor device acts as a variable electrical resistance in the said readout electrical circuit [101], and 3) a binary-wave voltage source [120] connected to the said suspended platform micro-thermistor sensor device [100], and 4) ohmmeter [140].

In this invention, the ohmmeter [140] is an electrical element that measures the micro-thermistor [100] electrical resistance. A more accurate type of ohmmeter has an electronic circuit that passes a current ($I_b$) through the micro-thermistor resistance, and another circuit that measures the voltage ($V_b$) across the micro-thermistor resistance. Since the current $I_b$ and voltage $V_b$ at the micro-thermistor are related to the driving voltage V [120] and to the readout electrical circuit architecture [101], the micro-thermistor electrical resistance can be measured by probing the driving voltage V and the voltage $V_L$ at some other load element (resistance, capacitance, or inductance) of the readout circuit. The readout electrical circuit [101] thus comprises at least one load resistance $R_L$ (or a load capacitance, or a load inductance) that can be used to determine the micro-thermistor electrical resistance, and thus function as the ohmmeter [140] of the readout electrical circuit [101]. The ohmmeter load resistance can be the micro-thermistor electrical resistance itself, or any other electrical elements of the readout circuit either a resistance, a capacitance, or an inductance, or a combination thereof. The ohmmeter [140] is therefore either a R, a RC, a RL, or a RCL analog or digital electronic circuit part of the readout circuit [101].

The readout electrical circuit [101] comprises at least one load resistance acting as an ohmmeter [140], and may comprise other electrical resistances, capacitances and inductances. The readout circuit may be integrated on the substrate [300] by CMOS fabrication process, or be external to the substrate and made of standard electronics components electrically connected to the suspended platform micro-thermistor [100]. The micro-thermistor suspended platform [100] is a variable electrical resistance in the readout circuit [101] and is exposed to the gas pressure of a given atmospheric environment [400]. The rest of the readout circuit [101] may or may not be exposed to the gas pressure of the environment [400]. It will be appreciated by those skilled in the art that the exemplary embodiments shown in this invention relate to very simple readout circuits, easily integrated onto small CMOS platforms. Thus, the readout circuit [101] surface area may be as small as 1 mm$^2$ or smaller.

Figure 3 shows an exemplary readout circuit embodiment of the invention. The readout circuit [101] includes a voltage source [120] driving both a micro-thermistor device [100] and a load resistance [130]. The voltage source [120] provides a binary-wave voltage signal V [150] that can be adjusted in value and in amplitude ($V_1$, $V_2$, $\Delta V$). The voltage $V_L$ [160] at the load resistance [130] can be used to determine the resistance of the micro-thermistor [100], therefore the load resistance [130] acts as the ohmmeter [140] of the readout circuit [101]. The readout circuit [101] may be made of analog or digital electronics components or a combination of analog and digital electronics components. Given this circuit embodiment, the voltage $V_b$ at the micro-thermistor [100] and the voltage $V_L$ [160] at the load resistance [130] are given by the following transfer functions well known in the art:

$$V_b = V\, R_b\, /\, (R_L + R_b)$$

$$V_L = V\, R_L\, /\, (R_L + R_b)$$

The ohmic responsivity of the micro-thermistor device [100] can be determined using:

$$\Omega = dR_b/dP_b = (dR_b/dV_L)\,(dV_L/dV)\,(dV/dP_b) = (\Delta V_L\,/\,\Delta V)\,(R_L + R_b)^4\,/\,2V^2 R_b R_L$$

Where V is the average voltage value of the voltage signal [150], $V = (V_1 + V_2)\,/\,2$, and $R_b$ is the average electrical resistance of the micro-thermistor [100], $R_b = (R_{b1} + R_{b2})/2$. The ohmic responsivity $\Omega$ □of the micro-thermistor device can be measured from the ratio between the voltage change $\Delta V_L$ at the load resistance [130,140] and the amplitude $\Delta V$ of the binary-wave voltage source [120] of the readout circuit [101]. Therefore, the electrical response $\Delta V_L$ of the ohmmeter [130,140] is proportional to the ohmic responsivity $\Omega$ of the micro-thermistor device [100], which is related to the gas pressure p inside the environment [400].

Cancellation of the temperature dependency of the thermal components [10], [20], [40], [50] and [80] can be achieved by keeping the voltages ($V_{L1}$, $V_{L2}$,□$\Delta V_L$) at the load resistance always at the same predetermined values, while adjusting the binary-wave voltages ($V_1$, $V_2$,□$\Delta V$) to obtain the said voltages at the load resistance. The predetermined values of ($V_{L1}$, $V_{L2}$,□$\Delta V_L$) are such that the minimum voltage ($V_1$) of the binary-wave electrical excitation is adjusted so that the micro-thermistor resistance is at a predetermined value $R_{b1}$ (and the load voltage at a predetermined value $V_{L1}$) and the maximum voltage ($V_2$) of the binary-wave electrical excitation is adjusted so that the micro-thermistor resistance is at a predetermined value $R_{b2}$ (and the load voltage at a predetermined value $V_{L2}$), where the difference of electrical resistance, $dR_b = R_{b2} - R_{b1} = \alpha R_b\, dT_b$, corresponds to a difference of temperature for the micro-thermistor, $dT_b = T_{b2} - T_{b1}$, of a few degrees Kelvin. The difference $dR_b$ is thus a constant value and the measurements are done always at the same micro-thermistor temperatures and same $\Delta V_L$. The incremental amount of electrical heating power [30] applied to the micro-thermistor suspended platform [100] is $dP_b = V_{b2}^2/R_{b2} - V_{b1}^2/R_{b1}$, where $V_{b1}$ and $V_{b2}$ are the voltage values at the micro-thermistor [100] related to $V_1$ and $V_2$ by virtue of the abovementioned transfer function, and the ohmic responsivity is determined by the ratio $\Omega = dR_b/dP_b$. Since the ohmic responsivity $\Omega$ □of the micro-thermistor device [100] is related to its thermal conductivity G and to gas pressure p, the measurement of ohmic responsivity provides a measurement of gas pressure within the environment [400]. And since the load resistance [130] acts as the ohmmeter [140], the load voltage is identical to the ohmmeter voltage, $V_{ohm} = V_L$, and the ohmmeter electrical voltages ($V_{ohm1} = V_{L1}$, $V_{ohm2} = V_{L2}$, $\Delta V_{ohm} = \Delta V_L$) are kept constant at predetermined values, and the measurements are done always at the same micro-thermistor temperatures in order to cancel the temperature dependencies of the thermal components [10], [20], [40] [50] and [80]. Figure 4 shows another exemplary readout circuit embodiment of the invention. The readout circuit [101] includes a voltage source [120] driving both a micro-thermistor device [100] and a resistor bridge [210] comprising several resistors. The voltage source [120] provides a binary-wave voltage signal V [150] that can be adjusted in value and in amplitude ($V_1$, $V_2$, $\Delta V$). The voltage $V_G$ [220] at the bridge can be used to determine the resistance of the micro-thermistor [100], therefore the bridge voltage $V_G$ [220] acts as the ohmmeter [140] of the readout circuit [101]. The readout circuit [101] may be made of analog or digital electronics components or a combination of analog and digital electronics components. Given this circuit embodiment, the voltage $V_b$ at the micro-thermistor [100] and the voltage $V_G$ [220] at the bridge are given by the following transfer functions well known in the art:

$$V_b = V\, R_b\, /\, (R_3 + R_b)$$

$$V_G = V\, (\, R_b\, /\, (R_3 + R_b)\, -\, R_2\, /\, (R_1 + R_2)\,)$$

The ohmic responsivity of the micro-thermistor device [100] can be determined using:

$$\Omega = dR_b/dP_b = (dR_b/dV_G)\, (dV_G/dV)\, (dV/dP_b) = (\Delta V_G\, /\, \Delta V)\, (R_L + R_b)^4 /\, 2V^2 R_b R_L$$

Where V is the average voltage value of the voltage signal [150], $V = (V_1 + V_2)\, /\, 2$, and $R_b$ is the average electrical resistance of the micro-thermistor [100], $R_b = (R_{b1} + R_{b2})/2$. The ohmic responsivity $\Omega$ of the micro-thermistor device can be measured from the ratio between the voltage change $\Delta V_G$ at the bridge [220] and the amplitude $\Delta V$ of the binary-wave voltage source [120] of the readout circuit [101]. Therefore, the electrical response $\Delta V_G$ of the ohmmeter [220,140] is proportional to the ohmic responsivity $\Omega$ of the micro-thermistor device [100], which is related to the gas pressure p inside the environment [400].

Cancellation of the temperature dependency of the thermal components [10], [20], [40], [50] and [80] can be achieved by keeping the voltages ($V_{G1}$, $V_{G2}$, $\Delta V_G$) at the bridge always at the same predetermined values, while adjusting the binary-wave voltages ($V_1$, $V_2$, $\Delta V$) to obtain the said voltages at the bridge. The predetermined values of ($V_{G1}$, $V_{G2}$, $\Delta V_G$) are such that the minimum voltage ($V_1$) of the binary-wave electrical excitation is adjusted so that the micro-thermistor resistance is at a predetermined value $R_{b1}$ (and the bridge voltage at a predetermined value $V_{G1}$) and the maximum voltage ($V_2$) of the binary-wave electrical excitation is adjusted so that the micro-thermistor resistance is at a predetermined value $R_{b2}$ (and the bridge voltage at a predetermined value $V_{G2}$), where the difference of electrical resistance, $dR_b = R_{b2} - R_{b1} = \alpha R_b\, dT_b$, corresponds to a difference of temperature for the micro-thermistor, $dT_b = T_{b2} - T_{b1}$, of a few degrees Kelvin. The difference $dR_b$ is thus a constant value and the measurements are done always at the same micro-thermistor temperatures and same $\Delta V_G$. The incremental amount of electrical heating power [30] applied to the micro-thermistor suspended platform [100] is $dP_b = V_{b2}^2/R_{b2} - V_{b1}^2/R_{b1}$, where $V_{b1}$ and $V_{b2}$ are the voltage values at the micro-thermistor [100] related to $V_1$ and $V_2$ by virtue of the abovementioned transfer function, and the ohmic responsivity is determined by the ratio $\Omega = dR_b/dP_b$. Since the ohmic responsivity $\Omega$ of the micro-thermistor device [100] is related to its thermal conductivity G and to gas pressure p, the measurement of ohmic responsivity provides a measurement of gas pressure within the environment [400]. And since the bridge [220] acts as the ohmmeter [140], the bridge voltage is identical to the ohmmeter voltage, $V_{ohm} = V_G$, and the ohmmeter electrical voltages ($V_{ohm1} = V_{G1}$, $V_{ohm2} = V_{G2}$, $\Delta V_{ohm} = \Delta V_G$) are kept constant at predetermined values, and the measurements are done always at the same micro-thermistor temperatures in order to cancel the temperature dependencies of the thermal components [10], [20], [40], [50] and [80].

The invention is not limited to these specific readout circuit embodiments and may show different circuit architectures comprising electrical resistances, capacitances and inductances, connected in such a way as to generate different transfer functions with or without electrical gain, and to provide a measurement of the ohmic responsivity of the micro-thermistor suspended platform [100].

Since the ohmic responsivity of the micro-thermistor suspended platform [100] is related to gas pressure, the micro-thermistor gas pressure sensor assembly of the present invention becomes calibrated by measuring and specifying the parametric relation between the ohmic responsivity $\Omega$ of the micro-thermistor suspended platform [100] and the gas pressure p within the environment [400]. Equivalently, the micro-thermistor gas pressure sensor assembly of the present invention becomes calibrated by measuring and specifying the parametric relation between the ohmmeter electrical voltage difference $\Delta V_{ohm}$ and the gas pressure p within the environment [400].

The relation between $\Omega$ and p for the micro-thermistor gas pressure sensor are fundamentally linked to the relation between the thermal conductivity G of the micro-thermistor device and the gas pressure p.

$$\frac{\alpha R_b}{\Omega}\ =\ G_{leg} + G_{radiation} + G_{gas} + G_{conv} + \frac{dG}{dT_b}\,(T_b - T_s)$$

If the measurements are performed always at the same two micro-thermistor suspended platform temperatures $T_{b1}$ and $T_{b2}$, the relation becomes:

$$\frac{\alpha R_b}{\Omega} \;=\; G_{gas} + \text{constant} \;=\; \frac{\beta \cdot A}{\frac{ds}{\lambda_{gas_s}} + \frac{1}{\gamma_{gas}\,p}} \;+\; \frac{k \cdot \beta \cdot A}{\frac{de}{\lambda_{gas_e}} + \frac{1}{\gamma_{gas}\,p}} \;+\; \text{constant}$$

Assuming no temperature dependence, the variation of thermal conductivity G of the micro-thermistor device with pressure can be reduced to a 5-parameter polynomial relation that cancels the need for precise knowledge of the parameters ($\lambda_{gas}$, $\lambda_{gas}$, $\eta$, $T_s$, $T_{env}$, $\epsilon$, $d_s$, $d_e$, $\beta$, h) ☐☐of the system. If a relation between ohmic responsivity $\Omega$ and gas pressure p is sought, then we obtain a relation where the ohmic responsivity $\Omega$ ☐is commensurate with the gas pressure p:

$$\alpha\,R_b\,/\,\Omega \;=\; X1 + X2\,/\,(X3+p^{-1}) + X5\,/\,(X4+p^{-1}).$$

Where: X1 = $G_{leg} + G_{rad} + G_{conv} + dG/dT_b\,(T_b-T_s)$, X2 = $\gamma\beta A$, X3 = $\gamma d_s/\lambda$, X4 = $\gamma d_e/\lambda$ and X5 = $k\gamma\beta A$. Since the ohmic responsivity $\Omega$ is related to the experimentally measurable parameters of the micro-thermistor ($P_{b1}$, $P_{b2}$, $R_{b1}$, $R_{b2}$, $V_{b1}$, $V_{b2}$) and to the experimentally measurable parameters of the readout circuit ($R_L$, $V_{ohm}$, etc.), the 5-parameter polynomial relation can also relate to those measurable parameters. For example, if a relation between ohmmeter electrical voltage difference $\Delta V_{ohm}$ and gas pressure p is sought, then we obtain a relation where the ohmmeter electrical voltage $\Delta V_{ohm}$ is commensurate with the gas pressure p:

$$(\Delta V\,/\,\Delta V_{ohm})\,2\alpha\,V^2 R_b^2 R_L\,/\,(R_L+R_b)^4 \;=\; X1 + X2\,/\,(X3+p^{-1}) + X5\,/\,(X4+p^{-1}).$$

This relation is valid for the embodiments shown in figures 3 and 4, and the left hand side of the relation may be different for other readout circuit architectures having different voltage transfer functions, and the relation between p and $\Omega V_{ohm}$ can be reduced and normalized to a 5-parameter polynomial relation.

Therefore, calibrating the micro-thermistor gas pressure sensor made of a micro-thermistor device [100] and readout circuit [101] requires at least 5 different parameters, because the mathematical relation between gas pressure and ohmic responsivity comprises at least 5 different parameters; X1, X2, X3, X4 and X5. These parameters can be measured by performing 5 thermal conductivity measurements (or 5 ohmic responsivity measurements) at 5 different pressures, from which the parameters can be determined using standard fitting routines. These parameters depend on several factors such as temperature, gas composition and micro-thermistor physical characteristics, as listed in the table below. Therefore, whenever the parametric relation of a single sensor is extended to other sensors, several assumptions are implicitly made as described in Table 1. If the assumptions are valid, a same 5-parameter polynomial relation can be applied to a plurality of micro-thermistor gas pressure sensors of the same physical characteristics. Therefore, if the assumptions are valid, the same ohmic responsivity applies to a plurality of suspended platform micro-thermistor gas pressure sensors of the same physical characteristics.

Table 1: Parameters of the abovementioned 5-parameter polynomial relation.

| Parameter | Form | Dependencies |
|---|---|---|
| X1 | X1 = $G_{leg} + G_{rad} + G_{conv} + dG/dT_b\,(T_b-T_s)$ | Micro-thermistor temperature, substrate temperature, environment temperature, packaging environment, leg conduction, micro-thermistor emissivity, micro-thermistor surface area. |
| X2 | X2 = $\gamma\beta A$ | Gas composition, micro-thermistor surface area. |
| X3 | X3 = $\gamma d_s/\lambda$ | Gas composition, substrate temperature, micro-thermistor distance to substrate. |
| X4 | X4 = $\gamma d_e/\lambda$ | Gas composition, environment temperature, micro-thermistor distance to environment, packaging environment. |
| X5 | X5 = $k\gamma\beta A$ | Gas composition, micro-thermistor surface area, environment temperature, substrate temperature. |

In the present invention, the method for gas pressure measurement thus consists in electrically exciting a suspended platform micro-thermistor sensor device [100] with a binary-wave voltage source signal [120], and 2) measuring the ohmic responsivity of the said suspended platform micro-thermistor sensor device using an ohmmeter, wherein said ohmmeter has an electrical response proportional to said ohmic responsivity, and 3) determining gas pressure p from said ohmic responsivity $\Omega$, wherein the ohmic responsivity is related to the micro-thermistor thermal conductivity and to gas pressure. Gas pressure p is determined by the abovementioned 5-parameter polynomial relation relating pressure p with ohmic responsivity $\Omega$. Equivalently, gas pressure p is determined by the abovementioned 5-parameter polynomial relation relating pressure p with the ohmmeter electrical voltage difference $\Delta V_{ohm}$.

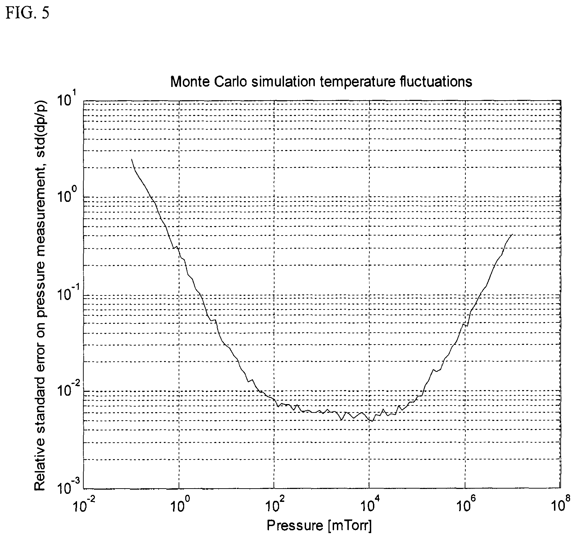

The above-mentioned 5-parameter polynomial relation is valid under the assumption of no temperature dependence. However, the temperatures inside the environment may vary with time due to thermal fluctuations, creating undesirable effects on the sensor calibration as most of the parameters of the parametric relation depend on temperature because they involve $G_{rad} = G_{rad}(T_b,T_s,T_{env})$ and $G_{gas} = G_{gas}(T_b,T_s,T_{env})$. The effects of a variation of $(T_b,T_s,T_{env})$ and the deviations from an ideal 5-parameter parametric relation can be determined by MonteCarlo simulation as plotted in figure 5. The plot shows the $1\sigma$ statistical error on the pressure measurement under a temperature fluctuation of 1K ($1\sigma$) for $T_b$ and 10K ($1\sigma$) for ($T_s,T_{env}$). This statistical error on the pressure measurement is with respect to a calibration done with a 5-parameter parametric relation under non-fluctuating temperatures. The relative errors on pressure measurements are typically below 10% between $10^{-2}$ Torr to $10^3$ Torr of air pressure. Therefore, the micro-thermistor gas pressure sensor of the present invention provides gas pressure sensing capability with good immunity to temperature fluctuations over a wide dynamic range. Further immunity to temperature fluctuations may be obtained by coupling thermally the substrate [300] of the gas pressure sensor assembly with a temperature controller, such as a thermo-electric cooling device.

While this invention has been particularly shown and described with references to preferred embodiments thereof, it will be understood by those skilled in the art that various changes in form and details may be made therein without departing from the scope of the invention encompassed by the appended claims.

## Claims

1.  A gas pressure sensor assembly comprising:

    at least one suspended platform micro-thermistor sensor device (100) exposed to the gas pressure of a given atmospheric environment (400), said at least one suspended platform micro-thermistor sensor device (100) being at least partially encased in said gas pressure environment (400);
    the gas pressure sensor assembly comprises:

    a binary-wave voltage source (120) connected to said suspended platform micro-thermistor sensor device (100), said binary-wave voltage source (120) providing a binary-wave electrical excitation of each of said at least one suspended platform micro-thermistor sensor device (100), said binary-wave electrical excitation being adapted to generate an incremental amount of electrical heating power applied to the micro-thermistor suspended platform leading to an incremental change in electrical resistance of each of said suspended platform micro-thermistor sensor device (100) from a first predetermined electrical resistance to a second predetermined electrical resistance, said incremental change in electrical resistance corresponding to an incremental change in temperature of each of said at least one suspended platform micro-thermistor sensor device (100) from a first predetermined temperature to a second predetermined temperature;
    an electrical readout circuit (101) connected to each of said at least one suspended platform micro-thermistor sensor device (100), wherein each of said at least one suspended platform micro-thermistor sensor device (100) acts as a variable electrical resistance in said electrical readout circuit (101) **characterized in that** said electrical readout circuit (101) is configured for measuring a first voltage applied to each of said at least one suspended platform micro-thermistor sensor device (100) at said first predetermined temperature, and for measuring a second voltage applied to each of said at least one suspended platform micro-thermistor sensor device (100) at said second predetermined temperature.

2.  The gas pressure sensor assembly of claim 1 wherein said suspended platform micro-thermistor sensor device (100) has a physical dimension between 0.1 $\mu$m and 250 $\mu$m.

3.  The gas pressure sensor assembly of claim 1 wherein said suspended platform micro-thermistor sensor device (100) has a thermal conductivity that changes in response to a change of said gas pressure.

4.  The gas pressure sensor assembly of claim 1 wherein said suspended platform micro-thermistor sensor device (100) comprises a thermally sensitive thin film made of a material having a Temperature Coefficient of Resistance (TCR) of at least 0.5% per degree Kelvin.

**5.** The gas pressure sensor assembly of claim 1 wherein said suspended platform micro-thermistor sensor device (100) comprises a thermally sensitive thin film made of vanadium oxide.

**6.** The gas pressure sensor assembly of claim 1 wherein said suspended platform micro-thermistor sensor device (100) comprises a thermally sensitive thin film made of amorphous silicon.

**7.** The gas pressure sensor assembly of claim 1 wherein said electrical excitation provided by the binary-wave voltage source (120) has a frequency below 100 Hertz.

**8.** A method for gas pressure measurement using a suspended platform micro-thermistor sensor device (100) exposed to the gas pressure of a given atmospheric environment (400), said suspended platform micro-thermistor sensor device (100) being at least partially encased in said gas pressure environment (400),

the method comprises:

electrically exciting said suspended platform micro-thermistor sensor device (100), with a binary-wave voltage signal, said binary-wave voltage signal being adapted to generate an incremental amount of electrical heating power applied to the micro-thermistor suspended platform leading to an incremental change in electrical resistance of said suspended platform micro-thermistor sensor device (100) from a first predetermined electrical resistance to a second predetermined electrical resistance, said incremental change in electrical resistance corresponding to an incremental change in temperature of said suspended platform micro-thermistor sensor device (100) from a first predetermined temperature to a second predetermined temperature; **characterized in that** the method further comprises:

measuring an ohmic responsivity of said suspended platform micro-thermistor sensor device (100), comprising measuring a first voltage applied to said suspended platform micro-thermistor sensor device (100) at said first predetermined temperature, and then measuring a second voltage applied to said suspended platform micro-thermistor sensor device (100) at said second predetermined temperature; and

determining said gas pressure from said ohmic responsivity.

**9.** The method for gas pressure measurement of claim 8 wherein said measuring of said ohmic responsivity applies to a plurality of suspended platform micro-thermistor sensor devices (100) having the same physical characteristics.

**10.** The method for gas pressure measurement of claim 8, wherein determining said gas pressure from said ohmic responsivity comprises using a mathematical relation between said gas pressure and said ohmic responsivity, said mathematical relation being determined from a fit to ohmic responsivity values measured at five different values of said gas pressure.

**Patentansprüche**

**1.** Gasdrucksensoreinheit, umfassend:

mindestens eine dem Gasdruck einer bestimmten atmosphärischen Umgebung (400) ausgesetzte Mikrothermistor-Sensorvorrichtung (100) mit aufgehängter Plattform, wobei die mindestens eine Sensorvorrichtung (100) von der Gasdruckumgebung (400) mindestens teilweise umschlossen ist;
wobei die Gasdrucksensoreinheit umfasst:

eine an die Mikrothermistor-Sensorvorrichtung (100) mit aufgehängter Plattform angeschlossene Binärwellen-Spannungsquelle (120), wobei die Binärwellen-Spannungsquelle (120) eine elektrische Erregung jeder der mindestens einen Mikrothermistor-Sensorvorrichtung (100) mit aufgehängter Plattform mit Binärwellen gewährleistet, wobei die elektrische Erregung mit Binärwellen dazu geeignet ist, eine zunehmende Menge an elektrischer Heizleistung zu erzeugen, die auf die aufgehängte Plattform des Mikrothermistors angewendet wird, was zu einer inkrementellen Veränderung des elektrischen Widerstands jeder der Mikrothermistor-Sensorvorrichtungen (100) mit aufgehängter Plattform von einem ersten vorgegebenen elektrischen Widerstand zu einem zweiten vorgegebenen elektrischen Widerstand führt, wobei die inkrementelle Veränderung des elektrischen Widerstands einer inkrementellen Änderung der Temperatur jeder der mindestens einen Mikrothermistor-Sensorvorrichtung (100) mit aufgehängter Plattform von einer ersten vorgegebenen Temperatur zu einer zweiten vorgegebenen Temperatur entspricht;

eine elektrische Ausleseschaltung (101), die an jede der mindestens einen Mikrothermistor-Sensorvorrichtung (100) mit aufgehängter Plattform angeschlossen ist, wobei jede der mindestens einen Mikrothermistor-Sensorvorrichtung (100) mit aufgehängter Plattform als variabler elektrischer Widerstand in der elektrischen Ausleseschaltung (101) fungiert, **dadurch gekennzeichnet, dass** die elektrische Ausleseschaltung (101) derart konfiguriert ist, dass sie eine auf jede der mindestens einen Mikrothermistor-Sensorvorrichtung (100) mit aufgehängter Plattform bei der ersten vorgegebenen Temperatur angewendete erste Spannung und eine bei der zweiten vorgegebenen Temperatur auf jede der mindestens einen Mikrothermistor-Sensorvorrichtung (100) mit aufgehängter Plattform angewendete zweite Spannung misst.

2. Gasdrucksensoreinheit nach Anspruch 1, wobei die Mikrothermistor-Sensorvorrichtung (100) mit aufgehängter Plattform eine physische Abmessung zwischen 0,1 und 250 μm aufweist.

3. Gasdrucksensoreinheit nach Anspruch 1, wobei die Mikrothermistor-Sensorvorrichtung (100) mit aufgehängter Plattform eine Wärmeleitfähigkeit aufweist, die sich als Reaktion auf eine Änderung des Gasdrucks ändert.

4. Gasdrucksensoreinheit nach Anspruch 1, wobei die Mikrothermistor-Sensorvorrichtung (100) mit aufgehängter Plattform eine wärmeempfindliche Dünnschicht umfasst, die aus einem Material mit einem TCR-Wert (Temperaturkoeffizient des Widerstands) von mindestens 0,5 % per Kelvin besteht.

5. Gasdrucksensoreinheit nach Anspruch 1, wobei die Mikrothermistor-Sensorvorrichtung (100) mit aufgehängter Plattform eine wärmeempfindliche Dünnschicht umfasst, die aus Vanadiumoxid besteht.

6. Gasdrucksensoreinheit nach Anspruch 1, wobei die Mikrothermistor-Sensorvorrichtung (100) mit aufgehängter Plattform eine wärmeempfindliche Dünnschicht umfasst, die aus amorphem Silizium besteht.

7. Gasdrucksensoreinheit nach Anspruch 1, wobei die von der Binärwellen-Spannungsquelle (120) bereitgestellte elektrische Erregung eine Frequenz kleiner als 100 Hz aufweist.

8. Verfahren zur Gasdruckmessung unter Verwendung einer dem Gasdruck einer bestimmten atmosphärischen Umgebung (400) ausgesetzten Mikrothermistor-Sensorvorrichtung (100) mit aufgehängter Plattform, wobei die Sensorvorrichtung (100) von der Gasdruckumgebung (400) mindestens teilweise umschlossen ist;

wobei das Verfahren umfasst:

elektrisches Erregen der Mikrothermistor-Sensorvorrichtung (100) mit aufgehängter Plattform mit einem Binärwellen-Spannungssignal, wobei das Binärwellen-Spannungssignal dazu geeignet ist, eine zunehmende Menge an elektrischer Heizleistung zu erzeugen, die auf die aufgehängte Plattform des Mikrothermistors angewendet wird, was zu einer inkrementellen Veränderung des elektrischen Widerstands der Mikrothermistor-Sensorvorrichtung (100) mit aufgehängter Plattform von einem ersten vorgegebenen elektrischen Widerstand zu einem zweiten vorgegebenen elektrischen Widerstand führt, wobei die inkrementelle Veränderung des elektrischen Widerstands einer inkrementellen Änderung der Temperatur der Mikrothermistor-Sensorvorrichtung (100) mit aufgehängter Plattform von einer ersten vorgegebenen Temperatur zu einer zweiten vorgegebenen Temperatur entspricht; **dadurch gekennzeichnet, dass** das Verfahren ferner umfasst:

Messen einer ohmschen Empfindlichkeit der Mikrothermistor-Sensorvorrichtung (100) mit aufgehängter Plattform, umfassend

Messen einer auf die Mikrothermistor-Sensorvorrichtung (100) mit aufgehängter Plattform bei der ersten vorgegebenen Temperatur angewendeten ersten Spannung, gefolgt durch Messen einer auf die Mikrothermistor-Sensorvorrichtung (100) mit aufgehängter Plattform bei der zweiten vorgegebenen Temperatur angewendeten zweiten Spannung und

Bestimmen des Gasdrucks anhand der ohmschen Empfindlichkeit.

9. Verfahren nach Anspruch 8, wobei das Messen der ohmschen Empfindlichkeit auf eine Mehrzahl von Mikrothermistor-Sensorvorrichtungen (100) mit aufgehängter Plattform mit denselben physikalischen Merkmalen Anwendung findet.

10. Verfahren nach Anspruch 8, wobei das Bestimmen des Gasdrucks anhand der ohmschen Empfindlichkeit umfasst:

Verwenden einer mathematischen Beziehung zwischen dem Gasdruck und der ohmschen Empfindlichkeit, wobei die mathematische Beziehung anhand einer Anpassung an ohmsche Empfindlichkeitswerte, die bei fünf unterschiedlichen Werten des Gasdrucks gemessen werden, bestimmt wird.

**Revendications**

1. Capteur de pression de gaz comprenant :

   au moins un capteur à micro-thermistance de plate-forme suspendue (100) exposé à la pression de gaz d'un environnement atmosphérique donné (400), ledit au moins un capteur à micro-thermistance de plate-forme suspendue (100) étant au moins partiellement contenu dans ledit environnement de pression de gaz (400) ; le capteur de pression de gaz comprenant :

   une source de tension à ondes binaires (120) reliée audit capteur à micro-thermistance de plate-forme suspendue (100), ladite source de tension à ondes binaires (120) assurant une excitation électrique par ondes binaires de chacun dudit au moins un capteur à micro-thermistance de plate-forme suspendue (100), ladite excitation électrique par ondes binaires étant adaptée pour générer une quantité incrémentale de puissance de chauffage électrique appliquée à la plate-forme suspendue à micro-thermistance qui provoque un changement incrémental de la résistance électrique de chacun dudit capteur à micro-thermistance de plate-forme suspendue (100) en la faisant passer d'une première résistance électrique prédéterminée à une seconde résistance électrique prédéterminée, ledit changement incrémental de résistance électrique correspondant à un changement incrémental de température de chacun dudit au moins un capteur à micro-thermistance de plate-forme suspendue (100) entre une première température prédéterminée et une seconde température prédéterminée ; un circuit de lecture électrique (101) relié à chacun dudit au moins un capteur à micro-thermistance de plate-forme suspendue (100), dans lequel chacun dudit au moins un capteur à micro-thermistance de plate-forme suspendue (100) agit comme une résistance électrique variable dans ledit circuit de lecture électrique (101), **caractérisé en ce que** ledit circuit de lecture électrique (101) est configuré pour mesurer une première tension appliquée à chacun dudit au moins un capteur à micro-thermistance de plate-forme suspendue (100) à ladite première température prédéterminée, et pour mesurer une seconde tension appliquée à chacun dudit au moins un capteur à micro-thermistance de plate-forme suspendue (100) à ladite seconde température prédéterminée.

2. Capteur de pression de gaz selon la revendication 1, dans lequel ledit capteur à micro-thermistance de plate-forme suspendue (100) possède une dimension physique comprise entre 0,1 $\mu$m et 250 $\mu$m.

3. Capteur de pression de gaz selon la revendication 1, dans lequel ledit capteur à micro-thermistance de plate-forme suspendue (100) présente une conductivité thermique qui change en réponse à un changement de ladite pression de gaz.

4. Capteur de pression de gaz selon la revendication 1, dans lequel ledit capteur à micro-thermistance de plate-forme suspendue (100) comprend un mince film thermiquement sensible composé d'un matériau qui présente un coefficient de résistance thermique (TCR) d'au moins 0,5% par kelvin.

5. Capteur de pression de gaz selon la revendication 1, dans lequel ledit capteur à micro-thermistance de plate-forme suspendue (100) comprend un mince film thermiquement sensible composé d'oxyde de vanadium.

6. Capteur de pression de gaz selon la revendication 1, dans lequel ledit capteur à micro-thermistance de plate-forme suspendue (100) comprend un mince film thermiquement sensible composé de silicium amorphe.

7. Capteur de pression de gaz selon la revendication 1, dans lequel ladite excitation électrique assurée par la source de tension à ondes binaires (120) présente une fréquence inférieure à 100 Hertz.

8. Procédé de mesure de pression de gaz à l'aide d'un capteur à micro-thermistance de plate-forme suspendue (100) exposé à la pression de gaz d'un environnement atmosphérique donné (400), ledit capteur à micro-thermistance de plate-forme suspendue (100) étant au moins partiellement contenu dans ledit environnement de pression de gaz (400),

le procédé comprenant :

l'excitation électrique dudit capteur à micro-thermistance de plate-forme suspendue (100), avec un signal de tension à ondes binaires, ledit signal de tension à ondes binaires étant adapté pour générer une quantité incrémentale de puissance de chauffage électrique appliquée à la plate-forme suspendue à micro-thermistance qui provoque un changement incrémental de résistance électrique dudit capteur à micro-thermistance de plate-forme suspendue (100) en la faisant passer d'une première résistance électrique prédéterminée à une seconde résistance électrique prédéterminée, ledit changement incrémental de résistance électrique correspondant à un changement incrémental de température dudit capteur à micro-thermistance de plate-forme suspendue (100) entre une première température prédéterminée et une seconde température prédéterminée ; **caractérisé en ce que** le procédé comprend en outre :

la mesure d'une sensibilité ohmique dudit capteur à micro-thermistance de plate-forme suspendue (100), comprenant la mesure d'une première tension appliquée audit capteur à micro-thermistance de plate-forme suspendue (100) à ladite première température prédéterminée, puis la mesure d'une seconde tension appliquée audit capteur à micro-thermistance de plate-forme suspendue (100) à ladite seconde température prédéterminée ; et
la détermination de ladite pression de gaz à partir de ladite sensibilité ohmique.

9. Procédé de mesure de pression de gaz selon la revendication 8, dans lequel ladite mesure de ladite sensibilité ohmique s'applique à une pluralité de capteurs à micro-thermistance de plate-forme suspendue (100) ayant les mêmes caractéristiques physiques.

10. Procédé de mesure de pression de gaz selon la revendication 8, dans lequel la détermination de ladite pression de gaz à partir de ladite sensibilité ohmique comprend l'utilisation d'une relation mathématique entre ladite pression de gaz et ladite sensibilité ohmique, ladite relation mathématique étant déterminée à partir d'une adaptation à des valeurs de sensibilité ohmique mesurées à cinq valeurs différentes de ladite pression de gaz.

FIG. 1

FIG. 2

FIG. 3

FIG. 4

FIG. 5

Monte Carlo simulation temperature fluctuations

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070069133 A1
- US 6945119 B2
- US 7331237 B2

- US 20060131501 A1
- WO 2007089516 A2